# EUROPEAN PATENT APPLICATION

(11) **EP 4 654 337 A1**
(43) Date of publication of application: **26.11.2025**
(21) Application number: 25150747.1
(22) Date of filing: 08.01.2025
(51) Int. Cl.: H01M 10/6555, H01M 50/209, H01M 50/30, H01M 50/342

(54) **BATTERY MODULE**

(30) Priority: 20.05.2024 KR 20240064953
(71) Applicant: SAMSUNG SDI CO., LTD., Yongin-si, Gyeonggi-do 17084 (KR)
(72) Inventor: Kim, Gang Yul, 16678 Suwon-si, Gyeonggi-do (KR)
(74) Representative: Gulde & Partner

(57) **Abstract**

A battery module includes a plurality of battery cells, each including a vent in a first surface, and arranged along a first direction, and an end plate arranged along the first direction to face a second surface of a battery cell of the plurality of battery cells and comprising an expansion inducing portion spaced apart from the second surface and configured to induce expansion of the battery cell. According the present disclosure, as an expansion inducing portion spaced apart from a central portion of a battery cell and a lower portion where a vent is located is formed in an end plate disposed to face the battery cell such that the central portion and the lower portion of the battery cell expand when the battery cell swells, flames, gas, and the like generated inside the battery cell can be induced to be discharged to the lower portion of the battery cell through the vent.

## Description

### CROSS-REFERENCE TO RELATED APPLICATION

The present application claims priority to and the benefit of Korean Patent Application No. 10-2024-0064953, filed on May 20, 2024 in the Korean Intellectual Property Office, the entire disclosure of which is incorporated herein by reference.

### BACKGROUND

### 1. Field

Aspects of embodiments of the present disclosure relate to a battery module.

### 2. Discussion of Related Art

Secondary batteries are batteries that can be charged and discharged, unlike primary batteries that cannot be recharged. Low-capacity secondary batteries are used in small portable electronic devices, such as smartphones, feature phones, laptop computers, digital cameras, and camcorders, and high-capacity secondary batteries are widely used as motor driving power sources, power storage batteries, and the like, such as in hybrid vehicles, electric vehicles, and the like. These secondary batteries include an electrode assembly composed of a positive electrode and a negative electrode, a case which accommodates the same, and an electrode terminal connected to the electrode assembly.

Secondary batteries can be used as a battery pack formed of a plurality of unit battery cells connected in series and/or parallel to provide high energy density. The battery pack can be formed by interconnecting electrode terminals of a plurality of unit batteries to match a required power amount to implement, for example, high-output secondary batteries for electric vehicles.

The above-described information disclosed in the technology that forms the background of the present disclosure is provided to improve understanding of the background of the present disclosure, and thus may include information that does not constitute the related art.

### SUMMARY

According to an aspect of embodiments of the present disclosure, a battery module capable of preventing or substantially preventing heat propagation if thermal runaway of one or more battery cells occurs is provided.

The above and other aspects and features of the present disclosure will be described in or will be apparent from the following description of some embodiments of the present disclosure.

According to one or more embodiments, a battery module includes: a plurality of battery cells, each including a vent in a first surface, and arranged along a first direction, and an end plate arranged along the first direction to face a second surface of a battery cell of the plurality of battery cells and comprising an expansion inducing portion spaced apart from the second surface and configured to induce expansion of the battery cell.

The expansion inducing portion may be located in a first portion of the end plate, and a second portion of the end plate may be in contact with the second surface.

The expansion inducing portion may be recessed in the first portion.

The end plate may include an opening that communicates with the expansion inducing portion and is open toward a second direction intersecting the first direction.

A height of the expansion inducing portion may be 25% to 50% of a height of the end plate.

A height of the expansion inducing portion may be 50% or less of a height of the battery cell.

A depth of the expansion inducing portion may be 3% to 6% of a thickness of the end plate.

A length of the expansion inducing portion may be 50% to 65% of a length of the end plate.

The expansion inducing portion may include a first expansion inducing portion, and a second expansion inducing portion inside the first expansion inducing portion and recessed in the first portion.

A depth of the second expansion inducing portion may be greater than a depth of the first expansion inducing portion.

A height of the second expansion inducing portion may be less than or equal to a height of the first expansion inducing portion.

A depth of the second expansion inducing portion may be 6% to 12% of a thickness of the end plate.

A length of the second expansion inducing portion may be 45% to 55% of a length of the first expansion inducing portion.

A length of the second expansion inducing portion may be greater than or equal to a length of the vent.

The battery module may further include side plates arranged along a third direction intersecting at least one of the first direction or second direction to face third surfaces of the plurality of battery cells.

The battery module may further include an insulating sheet arranged along the first direction and located between battery cells of the plurality of battery cells.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure is not to be construed as being limited to the drawings:
FIG. 1 is a bottom perspective view schematically illustrating a battery module according to an embodiment of the present disclosure;
FIG. 2 is an exploded perspective view schematically illustrating the battery module of FIG. 1;
FIG. 3 is a perspective view schematically illustrating a battery cell according to an embodiment of the present disclosure;
FIG. 4 is a cross-sectional view schematically illustrating the battery cell of FIG. 3;
FIG. 5 is a bottom view schematically illustrating the battery module of FIG. 1;
FIG. 6 is an enlarged bottom view schematically illustrating the battery module of FIG. 1;
FIG. 7 is a perspective view schematically illustrating an end plate according to an embodiment of the present disclosure;
FIG. 8 is a front view schematically illustrating the end plate of FIG. 7;
FIG. 9 is a bottom view schematically illustrating the end plate of FIG. 7;
FIG. 10 is a bottom perspective view schematically illustrating a battery module according to another embodiment of the present disclosure;
FIG. 11 is an exploded perspective view schematically illustrating the battery module of FIG. 10;
FIG. 12 is a bottom view schematically illustrating the battery module of FIG. 10;
FIG. 13 is an enlarged bottom view schematically illustrating the battery module of FIG. 10;
FIG. 14 is a perspective view schematically illustrating an end plate according to an embodiment of the present disclosure;
FIG. 15 is a front view schematically illustrating the end plate of FIG. 14;
FIG. 16 is a bottom view schematically illustrating the end plate of FIG. 14;
FIG. 17 is a bottom perspective view schematically illustrating a battery module according to another embodiment of the present disclosure;
FIG. 18 is an exploded perspective view schematically illustrating the battery module of FIG. 17;
FIG. 19 is a bottom view schematically illustrating the battery module of FIG. 17;
FIG. 20 is a bottom perspective view schematically illustrating a battery module according to another embodiment of the present disclosure;
FIG. 21 is an exploded perspective view schematically illustrating the battery module of FIG. 20; and
FIG. 22 is a bottom view schematically illustrating the battery module of FIG. 20.

### DETAILED DESCRIPTION

Herein, some embodiments of the present disclosure will be described, in further detail, with reference to the accompanying drawings. The terms or words used in this specification and claims are not to be construed as being limited to the usual or dictionary meaning and are to be interpreted as having meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element, or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part, or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

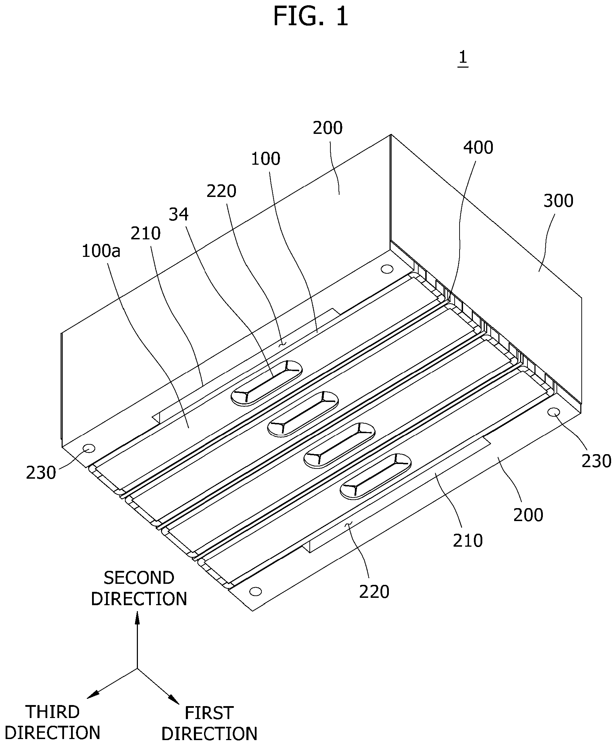

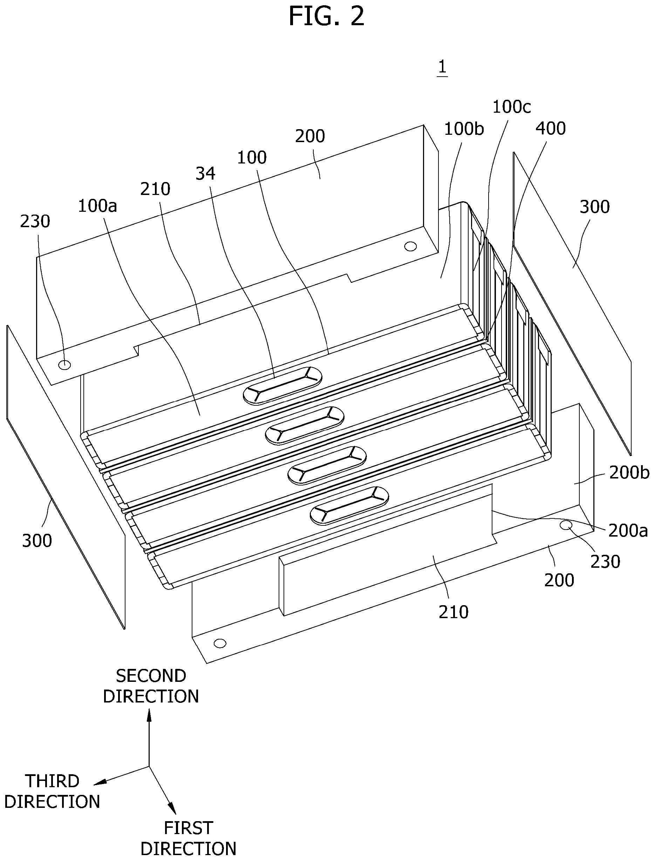

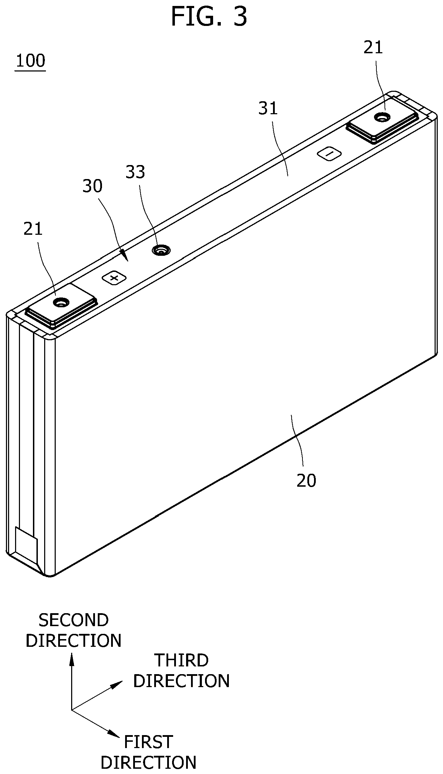

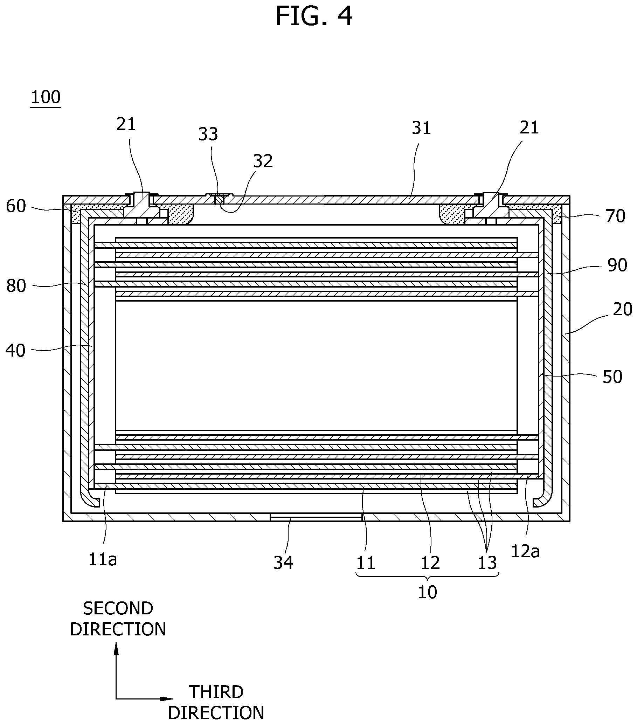

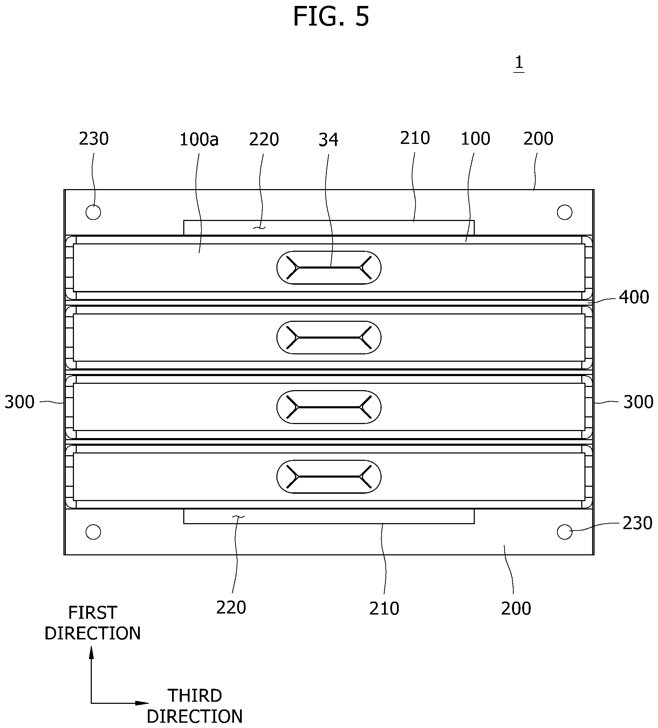

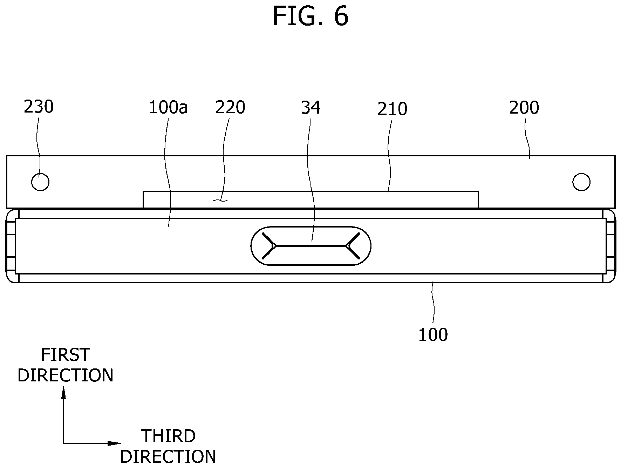

FIG. 1 is a bottom perspective view schematically illustrating a battery module according to an embodiment of the present disclosure; FIG. 2 is an exploded perspective view schematically illustrating the battery module of FIG. 1; FIG. 3 is a perspective view schematically illustrating a battery cell according to an embodiment of the present disclosure; FIG. 4 is a cross-sectional view schematically illustrating the battery cell of FIG. 3; FIG. 5 is a bottom view schematically illustrating the battery module of FIG. 1; and FIG. 6 is an enlarged bottom view schematically illustrating the battery module of FIG. 1.

Referring to FIGS. 1 to 6, a battery module 1 according to an embodiment of the present disclosure may include a battery cell 100, an end plate 200, a side plate 300, and an insulating sheet 400.

The battery cell 100 may function as a unit structure which stores and supplies power in the battery module 1. The battery cell 100 may be provided with a vent 34 in a first surface 100a. The first surface 100a may be a lower surface of the battery cell 100 facing a bottom of the battery cell 100. However, the present disclosure is not limited thereto, and, for example, the first surface 100a may be an upper surface of the battery cell 100 facing a top of the battery cell 100.

As the vent 34 is disposed in the first surface 100a facing the bottom of the battery cell 100, flames, gas, and the like generated inside the battery cell 100 may be discharged toward the bottom of the battery cell 100 through the vent 34.

The battery cell 100 may include at least one or more electrode assemblies 10 wound after interposing a separator 13, which is an insulator, between a positive electrode 11 and a negative electrode 12, a case 20 in which the electrode assembly 10 is accommodated, and a cap assembly 30 coupled to an opening of the case 20.

Herein, the battery cell 100 will be described as an example of a lithium ion secondary battery having a prismatic shape. However, the present disclosure is not limited thereto, and the battery cell 100 may be a lithium polymer battery or a cylindrical battery, for example.

The positive electrode 11 and the negative electrode 12 may include coated portions which are regions where an active material is applied to a current collector formed of a thin metal foil, and uncoated portions 11a and 12a which are regions where the active material is not coated.

The positive electrode 11 and the negative electrode 12 may be wound after interposing the separator 13, which is an insulator, therebetween. However, the present disclosure is not limited thereto, and the electrode assembly 10 may have a structure in which positive electrodes and negative electrodes composed of a plurality of sheets are alternately stacked with separators therebetween.

The case 20 forms an overall exterior of the battery cell 100 and may be formed of a conductive metal, such as aluminum, an aluminum alloy, or nickel-plated steel. Further, the case 20 may provide a space in which the electrode assembly 10 is accommodated.

The cap assembly 30 may include a cap plate 31 which covers the opening of the case 20 formed in a surface opposite to the first surface 100a of the battery cell 100, and the case 20 and the cap plate 31 may be composed of a conductive material. Here, a terminal 21 electrically connected to the positive electrode 11 or the negative electrode 12 may be installed to protrude outward through the cap plate 31.

In an embodiment, the terminal 21 protruding outward from the cap plate 31 may be formed as a pair. The pair of terminals 21 may be connected to the positive electrode 11 and the negative electrode 12, respectively, and may function as a positive electrode terminal and a negative electrode terminal of the battery cell 100.

In an embodiment, the terminals 21 may be electrically connected to current collectors including first and second current collectors 40 and 50 (herein, referred to as positive electrode and negative electrode current collectors) bonded to the positive electrode uncoated portion 11a or the negative electrode uncoated portion 12a by welding, for example.

For example, the pair of terminals 21 may be respectively coupled to the positive electrode and negative electrode current collectors 40 and 50 by welding. However, the present disclosure is not limited thereto, and the terminals 21 and the positive electrode and negative electrode current collectors 40 and 50 may be formed by being integrally coupled, for example.

In an embodiment, an outer circumferential surface of an upper pillar of the terminal 21 may be threaded, and may be fixed to the cap plate 31 with a nut. However, the present disclosure is not limited thereto, and the terminals 21 may have a rivet structure and may be riveted, or may be coupled to the cap plate 31 by welding, for example.

In an embodiment, the cap plate 31 may be formed of a thin plate and coupled to the opening of the case 20, and an electrolyte inlet 32 in which a sealing stopper 33 may be installed may be formed in the cap plate 31.

The vent 34 may be provided in the case 20. The vent 34 may be provided in a lower surface of the case 20 which is the first surface 100a of the battery cell 100. The vent 34 may be opened and closed in response to changes in internal pressure of the case 20. That is, the vent 34 may remain closed and seal the case 20 during normal operation of the electrode assembly 10.

The vent 34 may be opened as the internal pressure of the case 20 rises above a certain amount (e.g., a set amount), such as due to overcharging, a fire, or the like, and may discharge emissions, such as flames, gas, and the like, from the inside of the case 20 to the outside of the case 20.

In an embodiment, an insulating member may be installed between the electrode assembly 10 and the cap plate 31. The insulating member may include first and second lower insulating members 60 and 70, and each of the first and second lower insulating members 60 and 70 may be installed between the electrode assembly 10 and the cap plate 31.

Further, according to an embodiment, an end of a separation member, which may be installed to face a side surface of electrode assembly 10, may be installed between the insulating member and the terminal 21. In an embodiment, the separation member may include first and second separation members 80 and 90.

Accordingly, first ends of the first and second separation members 80 and 90 which may be installed to face first side surfaces of the electrode assembly 10 may be installed between the first and second lower insulating members 60 and 70 and the positive electrode and negative electrode terminals 21 and 22.

In an embodiment, the terminals 21 coupled to the positive electrode and negative electrode current collectors 40 and 50 by welding may be coupled to the first and second lower insulating members 60 and 70 and the first ends of the first and second separation members 80 and 90.

The battery cell 100 may be provided as a plurality of battery cells 100. The plurality of battery cells 100 may be disposed along a first direction. The first direction may refer to a width direction of the battery cells 100. The plurality of battery cells 100 may be disposed side by side.

The end plate 200 may be disposed along the first direction which is the same as the direction in which the battery cells 100 are disposed. The end plate 200 may be formed in a substantially plate shape. The end plate 200 may be provided as a pair of end plates 200.

The pair of end plates 200 may be disposed to face second surfaces 100b of the battery cells 100. The second surfaces 100b may refer to both, or opposite, widthwise side surfaces of the plurality of battery cells 100 disposed along the first direction.

In an embodiment, a length I and a height H of the end plate 200 may be the same as a length and a height of the battery cell 100. However, the present disclosure is not limited thereto, and, in an embodiment, the length I and/or height H of the end plate 200 may be greater than the length and/or height of the battery cell 100.

The end plate 200 may be provided with an expansion inducing portion 210. The expansion inducing portion 210 may be spaced apart from the second surface 100b of the battery cell 100 and induce expansion of the battery cell 100. The expansion inducing portion 210 may absorb an expansion amount due to swelling of the battery cell 100 and induce flames, gas, and the like generated inside the battery cell 100 to be discharged through the vent 34.

The expansion inducing portion 210 may be provided in a surface of the end plate 200 facing the second surface 100b of the battery cell 100. The expansion inducing portion 210 may be formed to be recessed in the end plate 200.

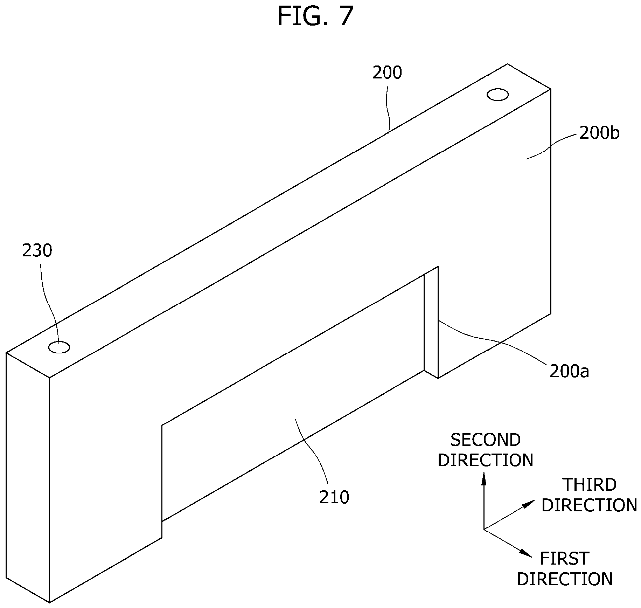

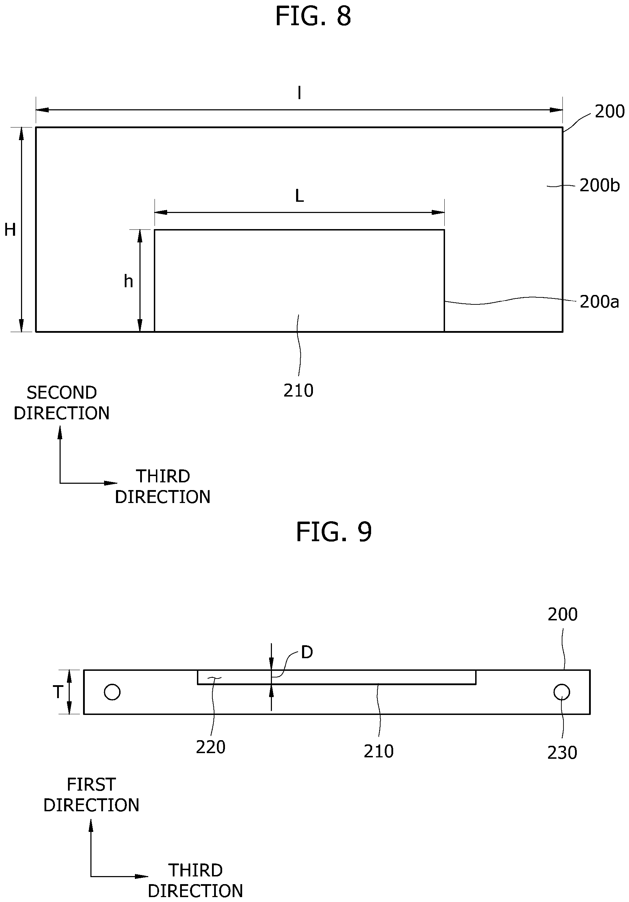

FIG. 7 is a perspective view schematically illustrating the end plate according to an embodiment of the present disclosure; FIG. 8 is a front view schematically illustrating the end plate of FIG. 7; and FIG. 9 is a bottom view schematically illustrating the end plate of FIG. 7.

Referring to FIGS. 1 to 9, the end plate 200 may include a first portion 200a and a second portion 200b. The first portion 200a and the second portion 200b may refer to a surface of the end plate 200 facing the second surface 100b of the battery cell 100.

The first portion 200a may be designated from a central portion of the end plate 200 to a lower portion of the end plate 200 where the vent 34 of the battery cell 100 is located.

The expansion inducing portion 210 may be provided in the first portion 200a of the end plate 200. The expansion inducing portion 210 may be formed to be recessed in the first portion 200a. The first portion 200a of the end plate 200 where the expansion inducing portion 210 is formed is not in contact with the second surface 100b of the battery cell 100, and the first portion 200a and the second surface 100b may be spaced apart from each other.

The second portion 200b of the end plate 200 is a remaining portion except for the first portion 200a, and the second portion 200b may be in contact with the second surface 100b of the battery cell 100.

The end plate 200 may be provided with an opening 220. The opening 220 may communicate with the expansion inducing portion 210 and may be open toward the second direction intersecting the first direction. The second direction may refer to a height direction of the battery cell 100 and the end plate 200. The opening 220 may be formed in a lower end portion of the end plate 200.

In an embodiment, the end plate 200 may be provided with through hole portions 230. The through hole portions 230 may be formed to penetrate the end plate 200 in the second direction. The through hole portions 230 may be formed at both, or opposite, longitudinal sides of the end plate 200. A fastening member, such as a bolt or the like, may be inserted into the through hole portion 230 and coupled to a pack housing. Accordingly, the end plate 200 may be fixed to the pack housing.

In an embodiment, a height h of the expansion inducing portion 210 may be 25% to 50% of a height H of the end plate 200. In an embodiment, the height h of the expansion inducing portion 210 may be 25% to 50% of the height H of the end plate 200 from the lower end portion of the end plate 200.

When the battery cell 100 swells, expansion of the central portion of the battery cell 100 and the lower portion of the battery cell 100 where the vent 34 is located is induced such that flames, gas, and the like may be discharged through the vent 34.

If the height h of the expansion inducing portion 210 is less than 25% of the height H of the end plate 200, the expansion of the central portion of the battery cell 100 may be suppressed if the battery cell 100 swells, and the expansion of the central portion of the battery cell 100 may not be induced.

If the height h of the expansion inducing portion 210 exceeds 50% of the height H of the end plate 200, expansion of the upper portion of the battery cell 100 may not be suppressed, and an expansion amount may not be concentrated in the lower portion of the battery cell 100 where the vent 34 is located.

In an embodiment, the height h of the expansion inducing portion 210 may be 50% or less of the height of the battery cell 100. The height h of the expansion inducing portion 210 may be 50% or less of the height of the battery cell 100 from the lower end portion of the battery cell 100 where the vent 34 of the battery cell 100 is located.

The central portion of the battery cell 100 and the lower portion of the battery cell 100 where the vent 34 is located are allowed to expand when the battery cell 100 swells, and flames, gas, and the like may be induced to be discharged through the vent 34.

If the height h of the expansion inducing portion 210 exceeds 50% of the height of the battery cell 100, the expansion of the upper portion of the battery cell 100 may not be suppressed, and the expansion amount may not be concentrated in the lower portion of the battery cell 100 where the vent 34 is located.

In an embodiment, a depth D of the expansion inducing portion 210 may be 3% to 6% of a thickness T of the end plate 200. If the depth D of the expansion inducing portion 210 is less than 3% of the thickness T of the end plate 200, an expansion amount of the central portion of the battery cell 100 and the lower portion of the battery cell 100 where the vent 34 is located may not be sufficiently absorbed when the battery cell 100 swells, and flames, gas, and the like may not be induced to be discharged through the vent 34.

If the depth D of the expansion inducing portion 210 exceeds 6% of the thickness T of the end plate 200, the central portion of the battery cell 100 and the lower portion of the battery cell 100 where the vent 34 is located are allowed to excessively expand and, thus, an expansion amount may not be concentrated in the lower portion of the battery cell 100, and flames, gas, and the like may not be induced to be discharged through the vent 34.

In an embodiment, a length L of the expansion inducing portion 210 may be 50% to 65% of a length I of the end plate 200. If the length L of the expansion inducing portion 210 is less than 50% of the length I of the end plate 200, the expansion of the central portion of the battery cell 100 and the lower portion of the battery cell 100 where the vent 34 is located may be suppressed when the battery cell 100 swells, and the expansion of the central portion of the battery cell 100 and the lower portion of the battery cell 100 may not be induced.

If the length L of the expansion inducing portion 210 exceeds 65% of the length I of the end plate 200, the central portion of the battery cell 100 and the lower portion of the battery cell 100 where the vent 34 is located may be allowed to excessively expand and, thus, the expansion amount may not be concentrated in the lower portion of the battery cell 100, and flames, gas, and the like may not be induced to be discharged through the vent 34.

The side plate 300 may be disposed along a third direction intersecting at least one of the first direction or the second direction. The third direction may refer to a longitudinal direction of the battery cell 100. The side plate 300 may be formed in a substantially plate shape.

In an embodiment, the side plate 300 may be provided as a pair of side plates 300. The pair of side plates 300 may be disposed to face third surfaces of the plurality of battery cells 100. The third surfaces may refer to both, or opposite, longitudinal side surfaces of the plurality of battery cells 100.

The side plates 300 may be disposed to intersect the end plates 200. Both, or opposite, end portions of the side plate 300 may be coupled to the end plates 200. In an embodiment, both, or opposite, end portions of one of the pair of side plates 300 may be respectively coupled to first end portions of the pair of end plates 200, and both, or opposite, end portions of the other side plate 300 may be respectively coupled to second end portions of the pair of end plates 200.

The insulating sheet 400 may be disposed along the first direction. The insulating sheet 400 may be provided as a plurality of insulating sheets 400. The plurality of insulating sheets 400 may be provided between the plurality of battery cells 100.

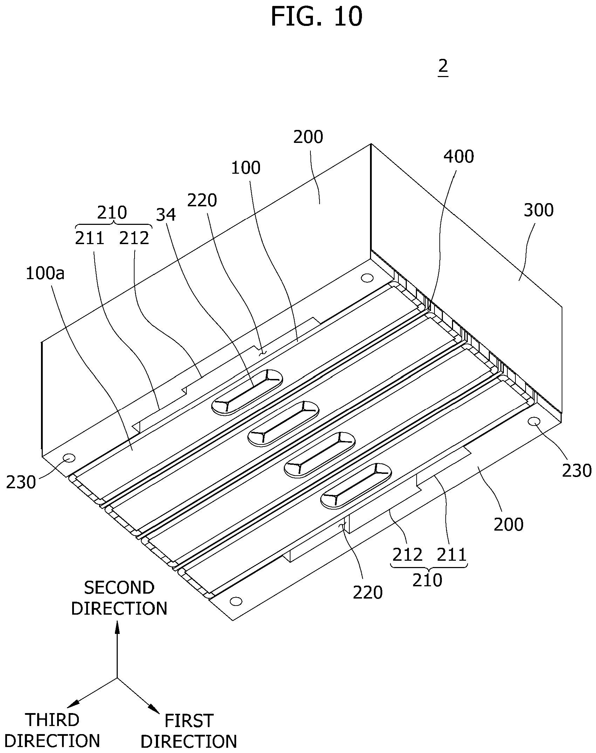

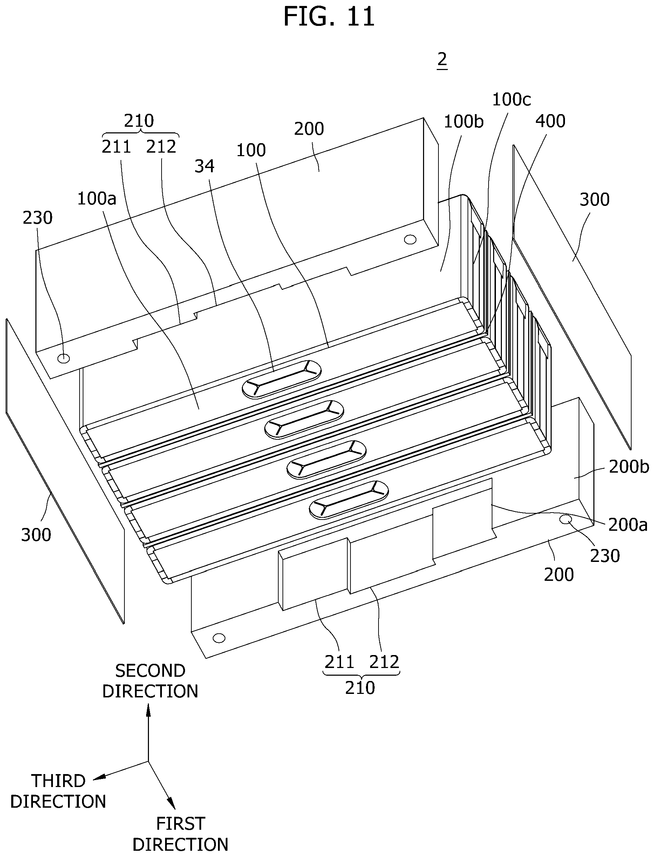

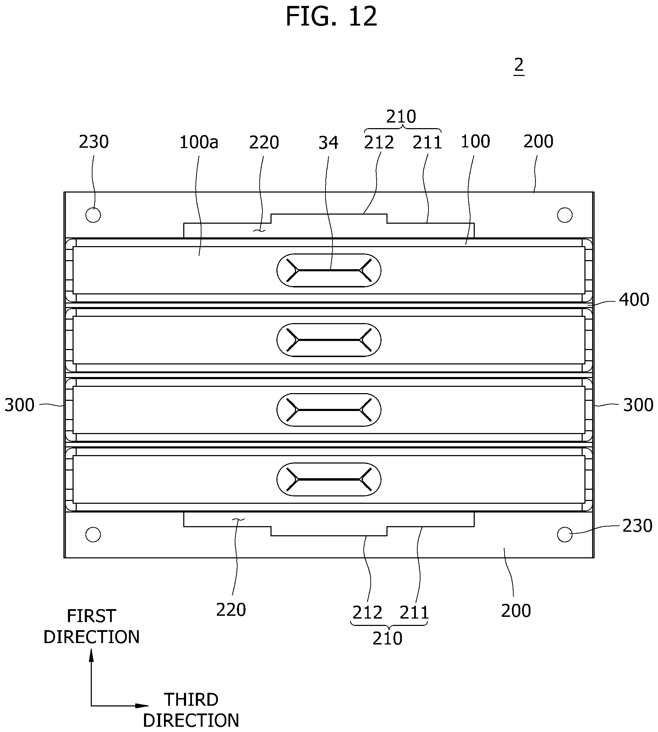

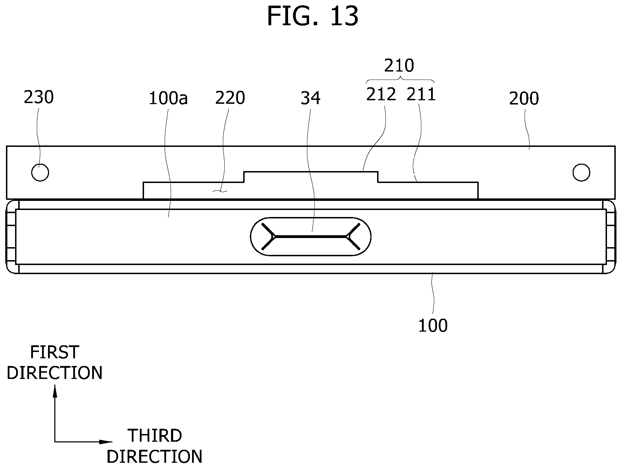

FIG. 10 is a bottom perspective view schematically illustrating a battery module according to another embodiment of the present disclosure; FIG. 11 is an exploded perspective view schematically illustrating the battery module of FIG. 10; FIG. 12 is a bottom view schematically illustrating the battery module of FIG. 10; and FIG. 13 is an enlarged bottom view schematically illustrating the battery module of FIG. 10.

Referring to FIGS. 10 to 13, a battery module 2 according to another embodiment of the present disclosure may include a battery cell 100, an end plate 200, a side plate 300, and an insulating sheet 400.

In the description of the battery module 2 according to an embodiment of the present disclosure, another embodiment of the end plate 200 in the battery module 1 according to the previously described embodiment of the present disclosure will be described.

The description of the battery module 1 according to the previously described embodiment of the present disclosure may be applied as is to the remaining configuration of the battery module 2 according to the present embodiment of the present disclosure.

The end plate 200 may be disposed along a first direction. The end plate 200 may be formed in a substantially plate shape. The end plate 200 may be provided as a pair. The pair of end plates 200 may be disposed to face second surfaces 100b of the battery cells 100.

The end plate 200 may be provided with an expansion inducing portion 210. The expansion inducing portion 210 may be spaced apart from the second surface 100b of the battery cell 100 and induce expansion of the battery cell 100. The expansion inducing portion 210 may absorb an expansion amount due to swelling of the battery cell 100 and induce flames, gas, and the like generated inside the battery cell 100 to be discharged through a vent 34.

The expansion inducing portion 210 may be provided in a surface of the end plate 200 facing the second surface 100b of the battery cell 100. The expansion inducing portion 210 may be formed to be recessed in the end plate 200.

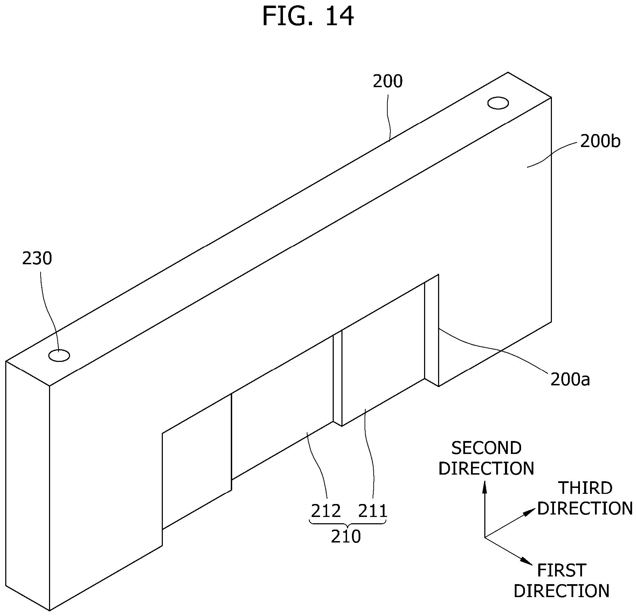

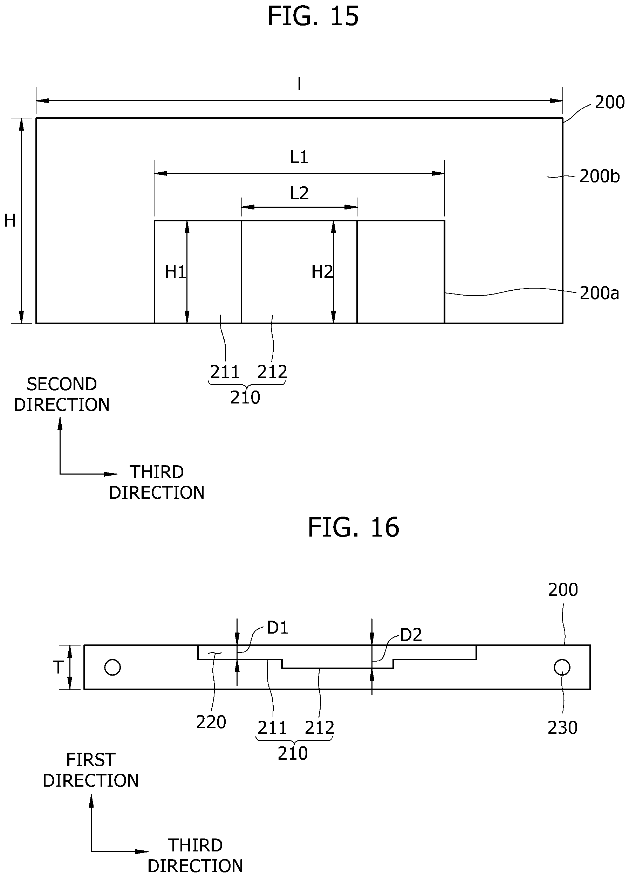

FIG. 14 is a perspective view schematically illustrating the end plate according to the present embodiment of the present disclosure; FIG. 15 is a front view schematically illustrating the end plate according to the present embodiment of the present disclosure; and FIG. 16 is a bottom view schematically illustrating the end plate according to the present embodiment of the present disclosure.

Referring to FIGS. 14 to 16, the expansion inducing portion 210 may include a first expansion inducing portion 211 and a second expansion inducing portion 212.

The first expansion inducing portion 211 may be provided in a first portion 200a of the end plate 200. The first expansion inducing portion 211 may be formed to be recessed in the first portion 200a. The first portion 200a of the end plate 200 where the first expansion inducing portion 211 is formed is not in contact with the second surface 100b of the battery cell 100, and the first portion 200a and the second surface 100b may be spaced apart from each other.

The second portion 200b of the end plate 200 is a remaining portion excluding the first portion 200a, and the second portion 200b may be in contact with the second surface 100b of the battery cell 100.

The end plate 200 may be provided with an opening 220. The opening 220 may communicate with the expansion inducing portion 210 and may be open toward a second direction intersecting the first direction. The opening 220 may be formed in a lower end portion of the end plate 200.

In an embodiment, the end plate 200 may be provided with through hole portions 230. The through hole portions 230 may be formed to penetrate the end plate 200 in the second direction. The through hole portions 230 may be formed at both, or opposite, longitudinal sides of the end plate 200. In an embodiment, a fastening member, such as a bolt or the like, may be inserted into the through hole portion 230 and coupled to a pack housing. Accordingly, the end plate 200 may be fixed to the pack housing.

In an embodiment, a height H1 of the first expansion inducing portion 211 may be 25% to 50% of a height H of the end plate 200. In an embodiment, the height H1 of the first expansion inducing portion 211 may be 25% to 50% of the height H of the end plate 200 from the lower end portion of the end plate 200.

If the battery cell 100 swells, expansion of a central portion of the battery cell 100 and the lower portion of the battery cell 100 where the vent 34 is located is induced such that flames, gas, and the like may be discharged through the vent 34.

If the height H1 of the first expansion inducing portion 211 is less than 25% of the height H of the end plate 200, expansion of the central portion of the battery cell 100 may be suppressed if the battery cell 100 swells, and expansion of the central portion of the battery cell 100 may not be induced.

If the height H1 of the first expansion inducing portion 211 exceeds 50% of the height H of the end plate 200, expansion of an upper portion of the battery cell 100 may not be suppressed, and an expansion amount may not be concentrated in the lower portion of the battery cell 100 where the vent 34 is located.

In an embodiment, the height H1 of the first expansion inducing portion 211 may be 50% or less of the height of the battery cell 100. The height H1 of the first expansion inducing portion 211 may be 50% or less of the height of the battery cell 100 from the lower portion of the battery cell 100 where the vent 34 of the battery cell 100 is located.

The central portion of the battery cell 100 and the lower portion of the battery cell 100 where the vent 34 is located are allowed to expand when the battery cell 100 swells, and flames, gas, and the like may be induced to be discharged through the vent 34.

If the height H1 of the first expansion inducing portion 211 exceeds 50% of the height of the battery cell 100, the expansion of the upper portion of the battery cell 100 may not be suppressed, and the expansion amount may not be concentrated in the lower portion of the battery cell 100 where the vent 34 is located.

In an embodiment, a depth D1 of the first expansion inducing portion 211 may be 3% to 6% of a thickness T of the end plate 200. If the depth D1 of the first expansion inducing portion 211 is less than 3% of the thickness T of the end plate 200, an expansion amount of the central portion of the battery cell 100 and the lower portion of the battery cell 100 where the vent 34 is located may not be sufficiently absorbed if the battery cell 100 swells, and flames, gas, and the like may not be induced to be discharged through the vent 34.

If the depth D1 of the first expansion inducing portion 211 exceeds 6% of the thickness T of the end plate 200, the central portion of the battery cell 100 and the lower portion of the battery cell 100 where the vent 34 is located may be allowed to excessively expand and, thus, the expansion amount may not be concentrated in the lower portion of the battery cell 100, and flames, gas, and the like may not be induced to be discharged through the vent 34.

In an embodiment, a length L1 of the first expansion inducing portion 211 may be 50% to 65% of a length I of the end plate 200. If the length L1 of the first expansion inducing portion 211 is less than 50% of the length I of the end plate 200, the expansion of the central portion of the battery cell 100 and the lower portion of the battery cell 100 where the vent 34 is located may be suppressed when the battery cell 100 swells, and the expansion of the central portion of the battery cell 100 and the lower portion of the battery cell 100 may not be induced.

If the length L1 of the first expansion inducing portion 211 exceeds 65% of the length I of the end plate 200, the central portion of the battery cell 100 and the lower portion of the battery cell 100 where the vent 34 is located may be allowed to excessively expand and, thus, the expansion amount may not be concentrated in the lower portion of the battery cell 100, and flames, gas, and the like may not be induced to be discharged through the vent 34.

The second expansion inducing portion 212 may be provided inside the first expansion inducing portion 211. The second expansion inducing portion 212 may be formed to be recessed in the first portion 200a. In an embodiment, the second expansion inducing portion 212 may be located at a center of the first expansion inducing portion 211.

A depth D2 of the second expansion inducing portion 212 may be deeper than the depth D1 of the first expansion inducing portion 211. The central portion of the battery cell 100 and the lower portion of the battery cell 100 where the vent 34 is located may be induced to expand further through the second expansion inducing portion 212.

A height H2 of the second expansion inducing portion 212 may be less than or equal to the height H1 of the first expansion inducing portion 211. If the height H1 of the first expansion inducing portion 211 and the height H2 of the second expansion inducing portion 212 are the same, the central portion of the battery cell 100 and the lower portion of the battery cell 100 where the vent 34 is located may be induced to expand intensively.

In an embodiment, the depth D2 of the second expansion inducing portion 212 may be 6% to 12% of the thickness T of the end plate 200. If the depth D2 of the second expansion inducing portion 212 is less than 6% of the thickness T of the end plate 200, additional expansion of the central portion of the battery cell 100 and the lower portion of the battery cell 100 where the vent 34 is located may not be sufficiently absorbed.

If the depth D2 of the second expansion inducing portion 212 exceeds 12% of the thickness T of the end plate 200, the central portion of the battery cell 100 and the lower portion of the battery cell 100 where the vent 34 is located may be allowed to excessively expand, and the expansion amount may not be concentrated in the lower portion of the battery cell 100.

In an embodiment, a length L2 of the second expansion inducing portion 212 may be 45% to 55% of the length L1 of the first expansion inducing portion 211. If the length L2 of the second expansion inducing portion 212 is less than 45% of the length of the length L1 of the first expansion inducing portion 211, the additional expansion of the central portion of the battery cell 100 and the lower portion of the battery cell 100 where the vent 34 is located may be limited.

If the length L2 of the second expansion inducing portion 212 exceeds 55% of the length L1 of the first expansion inducing portion 211, the excessive additional expansion of the central portion of the battery cell 100 and the lower portion of the battery cell 100 where the vent 34 is located may be allowed, and the expansion amount may not be concentrated in the lower portion of the battery cell 100.

In an embodiment, the length L2 of the second expansion inducing portion 212 may be longer than or equal to a length of the vent 34. When the length L2 of the second expansion inducing portion 212 is shorter than the length of the vent 34, the additional expansion of the lower portion of the battery cell 100 where the vent 34 is located may be limited.

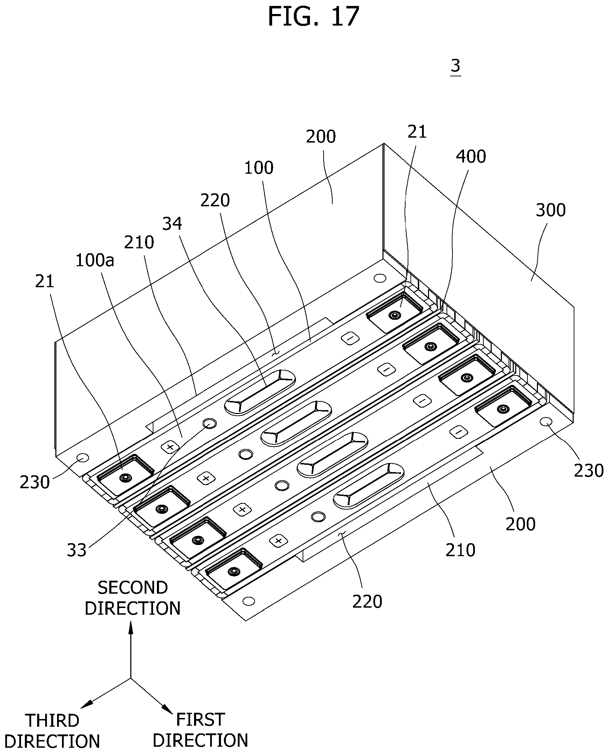

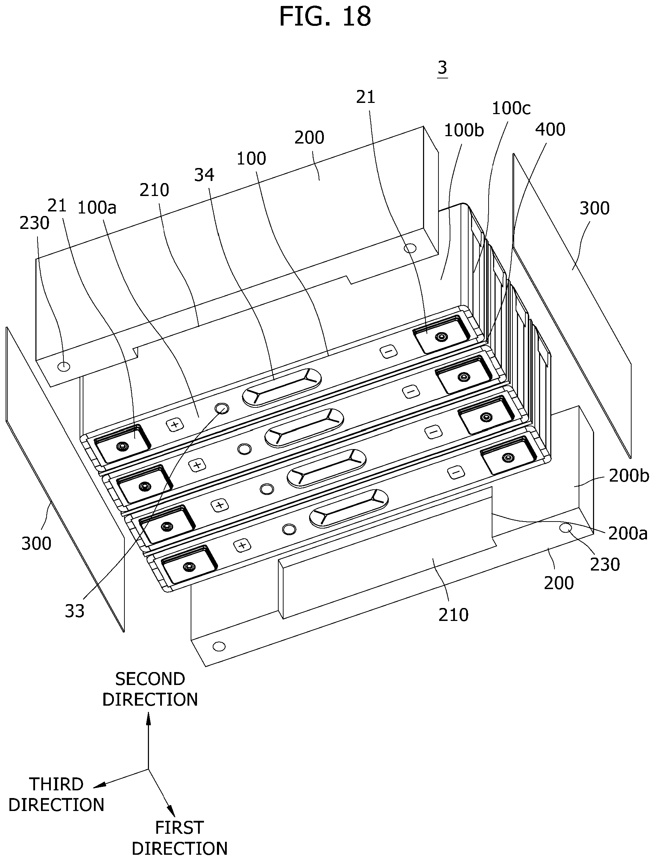

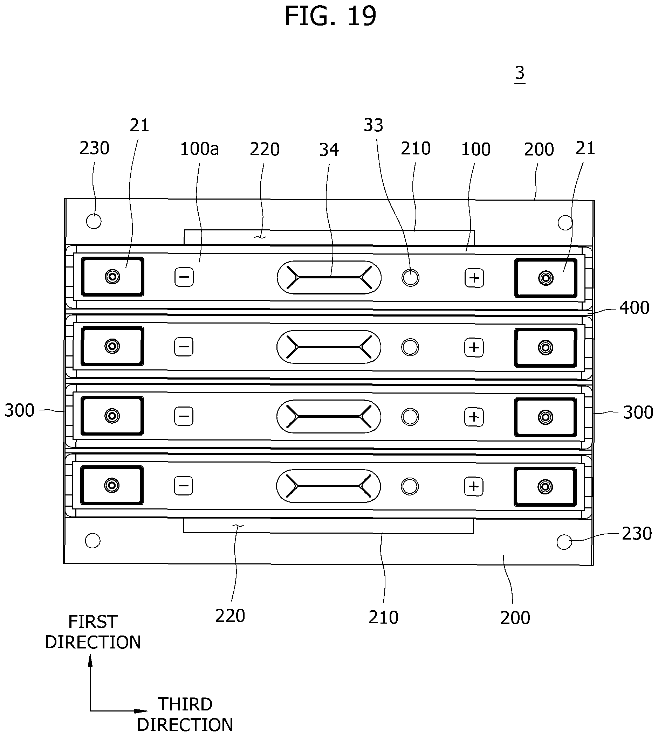

FIG. 17 is a bottom perspective view schematically illustrating a battery module according to another embodiment of the present disclosure; FIG. 18 is an exploded perspective view schematically illustrating the battery module of FIG. 17; and FIG. 19 is a bottom view schematically illustrating the battery module of FIG. 17.

Referring to FIGS. 3, 4, and 17 to 19, a battery module 3 according to the present embodiment of the present disclosure may include a battery cell 100, an end plate 200, a side plate 300, and an insulating sheet 400.

In the description of the battery module 3 according to the present embodiment of the present disclosure, embodiments of the battery cell 100 and the end plate 200 in the battery module 1 according to the previously described embodiment of the present disclosure or the battery module 2 according to the previously described embodiment of the present disclosure will be described.

The description of the battery module 1 or the battery module 2 may be applied as is to the remaining configuration of the battery module 3 according to the present embodiment of the present disclosure.

The battery cell 100 may be provided with a vent 34 in a first surface 100a. In an embodiment, a pair of terminals 21 and an electrolyte inlet 32 in which a sealing stopper 33 may be installed may be formed in the first surface 100a of the battery cell 100. In the embodiment, the first surface 100a may refer to an upper surface of a cap plate 31 located on a bottom surface of a case 20.

The battery cell 100 may be provided as a plurality of battery cells 100. The plurality of battery cells 100 may be disposed along a first direction.

The end plate 200 may be disposed along the first direction which is the same as the direction in which the battery cells 100 are disposed. The end plate 200 may be provided as a pair of end plates 200.

The pair of end plates 200 may be disposed to face second surfaces 100b of the battery cells 100.

The end plate 200 may be provided with an expansion inducing portion 210. The expansion inducing portion 210 may be spaced apart from the second surface 100b of the battery cell 100 and induce expansion of the battery cell 100.

The expansion inducing portion 210 may be provided in a surface of the end plate 200 facing the second surface 100b of the battery cell 100. The expansion inducing portion 210 may be formed to be recessed in the end plate 200.

The end plate 200 may include a first portion 200a and a second portion 200b. The expansion inducing portion 210 may be provided in the first portion 200a of the end plate 200. The expansion inducing portion 210 may be formed to be recessed in the first portion 200a. The first portion 200a of the end plate 200 where the expansion inducing portion 210 is formed is not in contact with the second surface 100b of the battery cell 100, and the first portion 200a and the second surface 100b may be spaced apart from each other.

The second portion 200b of the end plate 200 may be in contact with the second surface 100b of the battery cell 100.

The end plate 200 may be provided with an opening 220. The opening 220 may communicate with the expansion inducing portion 210 and may be open toward a second direction intersecting the first direction. The opening 220 may be formed in a lower end portion of the end plate 200.

In an embodiment, the end plate 200 may be provided with through hole portions 230. The through hole portions 230 may be formed to penetrate the end plate 200 in the second direction. In an embodiment, a fastening member, such as a bolt or the like, may be inserted into the through hole portion 230 and coupled to a pack housing. Accordingly, the end plate 200 may be fixed to the pack housing.

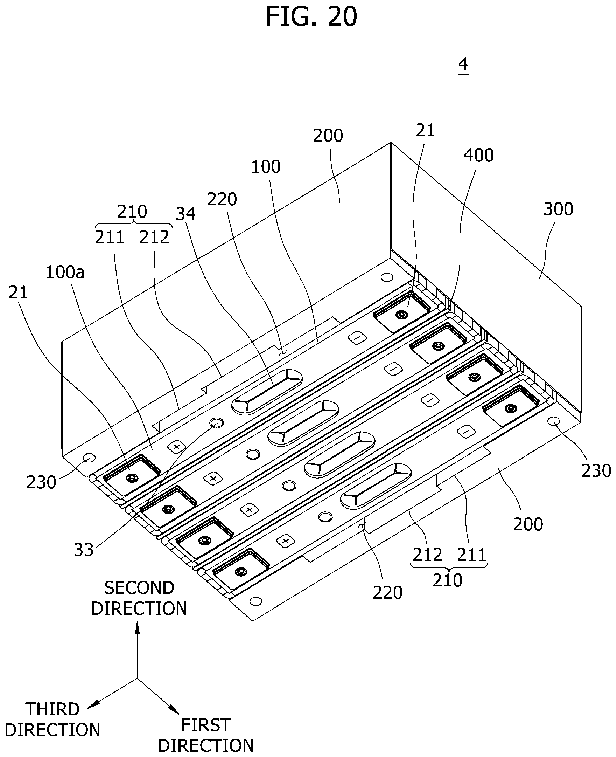

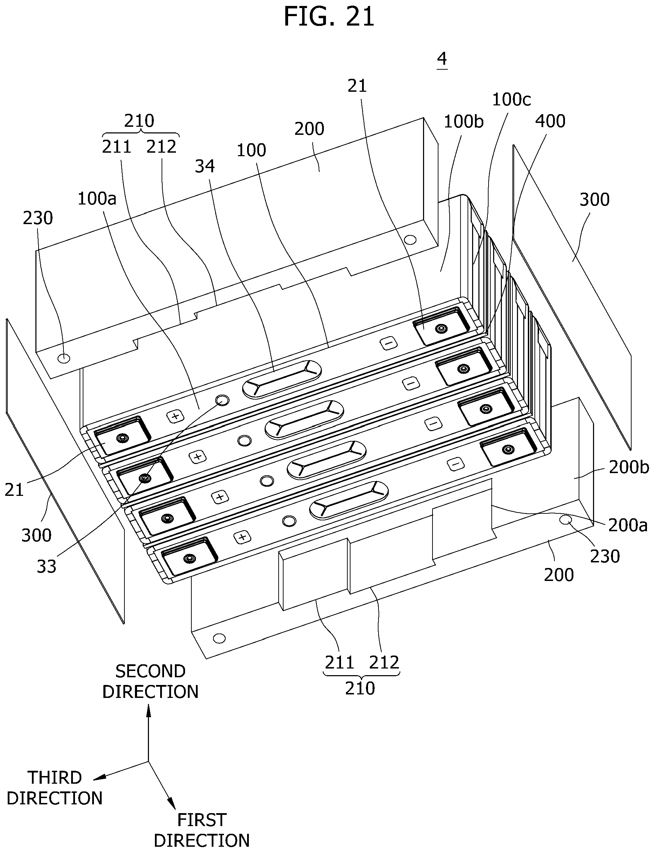

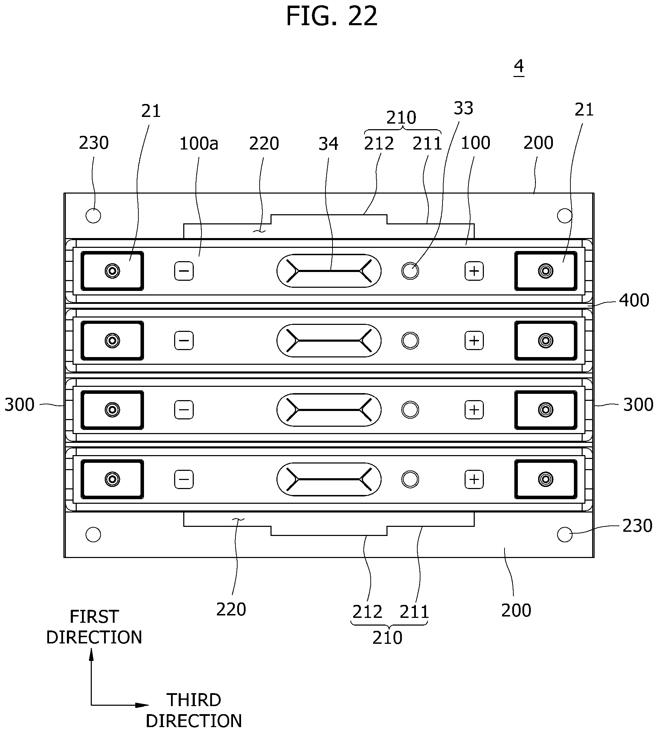

FIG. 20 is a bottom perspective view schematically illustrating a battery module according to another embodiment of the present disclosure; FIG. 21 is an exploded perspective view schematically illustrating the battery module of FIG. 20; and FIG. 22 is a bottom view schematically illustrating the battery module of FIG. 20.

Referring to FIGS. 20 to 22, a battery module 4 according to the present embodiment of the present disclosure may include a battery cell 100, an end plate 200, a side plate 300, and an insulating sheet 400.

In the description of the battery module 4 according to the present embodiment of the present disclosure, another embodiment of the end plate 200 in the battery module 3 according to the previously described embodiment of the present disclosure will be described.

The description of the battery module 3 may be applied as is to the remaining configuration of the battery module 4 according to the present embodiment of the present disclosure.

An expansion inducing portion 210 may include a first expansion inducing portion 211 and a second expansion inducing portion 212.

The first expansion inducing portion 211 may be provided in a first portion 200a of the end plate 200. The first expansion inducing portion 211 may be formed to be recessed in the first portion 200a. The first portion 200a of the end plate 200 where the first expansion inducing portion 211 is formed is not in contact with the second surface 100b of the battery cell 100, and the first portion 200a and the second surface 100b may be spaced apart from each other.

The second expansion inducing portion 212 may be provided inside the first expansion inducing portion 211. The second expansion inducing portion 212 may be formed to be recessed in the first portion 200a. The second expansion inducing portion 212 may be located at a center of the first expansion inducing portion 211.

According to one or more embodiments of the present disclosure, as an expansion inducing portion spaced apart from a central portion of a battery cell and a lower portion where a vent is located is formed in an end plate disposed to face the battery cell such that the central portion and the lower portion of the battery cell expand when the battery cell swells, flames, gas, and the like generated inside the battery cell can be induced to be discharged to the lower portion of the battery cell through the vent.

However, aspects and effects obtainable through the present disclosure are not limited to the above aspects and effects, and other technical aspects and effects that are not mentioned will be clearly understood by those skilled in the art from the following description of the present disclosure.

While the present disclosure has been described with reference to some example embodiments shown in the drawings, these embodiments are merely illustrative and it is to be understood that various modifications and equivalent other embodiments can be derived by those skilled in the art on the basis of the embodiments.

Therefore, the technical scope of the present disclosure should be defined by the claims.

## Claims

1. A battery module (1, 2, 3, 4) comprising:
a plurality of battery cells (100), each comprising a vent (34) in a first surface (100a), and arranged along a first direction; and
an end plate (200) arranged along the first direction to face a second surface (100b) of a battery cell (100) of the plurality of battery cells (100) and comprising an expansion inducing portion (210) spaced apart from the second surface (100b) and configured to induce expansion of the battery cell (100).

2. The battery module (1, 2, 3, 4) as claimed in claim 1, wherein the expansion inducing portion (210) is located in a first portion (200a) of the end plate (200), and
a second portion (200b) of the end plate (200) is in contact with the second surface (100b).

3. The battery module (1, 2, 3, 4) as claimed in claim 2, wherein the expansion inducing portion (210) is recessed in the first portion (200a).

4. The battery module (1, 2, 3, 4) as claimed in claims 2 or 3, wherein the end plate (200) comprises an opening (220) that communicates with the expansion inducing portion (210) and is open toward a second direction intersecting the first direction.

5. The battery module (1, 2, 3, 4) as claimed in claims 2 to 4, wherein a height of the expansion inducing portion (210) is 25% to 50% of a height (H) of the end plate (200).

6. The battery module (1, 2, 3, 4) as claimed in claims 2 to 5, wherein a height (h) of the expansion inducing portion (210) is 50% or less of a height of the battery cell (100).

7. The battery module (1, 2, 3, 4) as claimed in claims 2 to 6, wherein a depth (D) of the expansion inducing portion (210) is 3% to 6% of a thickness (T) of the end plate (200).

8. The battery module (1, 2, 3, 4) as claimed in claims 2 to 7, wherein a length (L) of the expansion inducing portion (210) is 50% to 65% of a length (I) of the end plate (200).

9. The battery module (1, 2, 3, 4) as claimed in claims 2 to 8, wherein the expansion inducing portion (210) comprises:
a first expansion inducing portion (211); and
a second expansion inducing portion (212) inside the first expansion inducing portion (211) and recessed in the first portion (200a).

10. The battery module (1, 2, 3, 4) as claimed in claim 9, wherein a depth (D2) of the second expansion inducing portion (212) is greater than a depth (D1) of the first expansion inducing portion (211).

11. The battery module (1, 2, 3, 4) as claimed in claims 9 or 10, wherein a height (H2) of the second expansion inducing portion (212) is less than or equal to a height (H1) of the first expansion inducing portion (211).

12. The battery module (1, 2, 3, 4) as claimed in claims 9 to 11, wherein a depth (D2) of the second expansion inducing portion (212) is 6% to 12% of a thickness (T) of the end plate (200).

13. The battery module (1, 2, 3, 4) as claimed in claims 9 to 12, wherein a length (L2) of the second expansion inducing portion (212) is 45% to 55% of a length (L1) of the first expansion inducing portion (211).

14. The battery module (1, 2, 3, 4) as claimed in claims 9 to 13, wherein a length of the second expansion (L2) inducing portion (212) is greater than or equal to a length of the vent (34).

15. The battery module (1, 2, 3, 4) as claimed in claims 4 to 14, further comprising side plates (300) arranged along a third direction intersecting at least one of the first direction or the second direction to face third surfaces of the plurality of battery cells (100).
